# EUROPÄISCHE PATENTSCHRIFT

(11) **EP 1 789 189 B1**
(45) Veröffentlichungstag und Bekanntmachung des Hinweises auf die Patenterteilung: **12.03.2008**
(21) Anmeldenummer: 05784037.3
(22) Anmeldetag: 09.09.2005
(51) Int. Cl.: B01J 35/04, F01N 3/28

(54) **METALLFOLIE MIT UNTERSCHIEDLICHEN EINBUCHTUNGEN**
METAL FOIL COMPRISING VARIOUS NOTCHES
FEUILLE METALLIQUE PRESENTANT DES RAINURES DIFFERENTES

(30) Priorität: 17.09.2004 DE 102004045106
(43) Veröffentlichungstag der Anmeldung: 30.05.2007
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); MAUS, Wolfgang, 51429 Bergisch Gladbach (DE)
(74) Vertreter: Rössler, Matthias
(86) Internationale Anmeldenummer: PCT/EP2005/009711
(87) Internationale Veröffentlichungsnummer: WO 2006/032383

(56) Entgegenhaltungen:
- WO-A-91/01807

## Beschreibung

Die vorliegende Erfindung betrifft eine Metallfolie mit einer Materialdicke im Bereich von 0,15 mm bis 0,02 mm aufweisend eine Struktur mit sich über eine Länge der Metallfolie erstreckenden und benachbart zueinander angeordneten Erhebungen und Senken. Zumindest ein Teil der Erhebungen oder Senken weisen mindestens eine erste Einbuchtung auf. Solche Metallfolien werden beispielsweise bei Abgasbehandlungseinrichtungen für mobile Verbrennungskraftmaschinen zur Begrenzung von Strömungspfaden für das Abgas eingesetzt.

Es sind bereits eine Vielzahl von strukturierten Metallfolien bekannt, die beispielsweise als Katalysator-Trägerkörper für Abgasbehandlungseinrichtungen eingesetzt werden. Die Struktur der Metallfolie dient zunächst einmal zur Bildung, Begrenzung, etc. von Strömungspfaden bzw. Kanälen innerhalb die Abgasbehandlungseinrichtung bzw. durch diese hindurch, wobei Abgasbehandlungseinrichtung diese in der Regel mit glatten und strukturierten Metallfolien aufgebaut ist. Als Struktur sind wellenförmige Strukturen, rechteckige Strukturen, Omega-Strukturen, Sägezahn-Strukturen, etc. bekannt. Diese sich in der Regel über die gesamte Länge der Metallfolie erstreckende Struktur ist meist durch Präge-Werkzeuge oder durch ineinander greifende Wellwalzen hergestellt worden. Dabei bildet sich eine üblicherweise regelmäßige Struktur auf, wobei sich die Maxima (bzw. Erhebungen) und Minima (bzw. Senken) normalerweise mit gleichem Abstand zueinander über die gesamte Länge der Metallfolie erstrecken. Dabei verlaufen die Erhebungen oder Senken zumeist parallel zur Länge der Metallfolie, es sind jedoch auch gebogene oder eckig verlaufende Erhebungen oder Senken bekannt.

Außerdem ist auch bekannt, eine solche strukturierte Metallfolie mit einer Sekundärstruktur zu versehen. Diese Sekundärstruktur (bzw. erste Einbuchtung) kann nur auf den Erhebungen, nur auf den Senken, zwischen den Erhebungen und Senken, oder auch über die Erhebungen und Senken hinweg ausgebildet sein. Die Sekundärstruktur ist in der Regel mit einer geringeren Höhe ausgestaltet als die Primärstruktur. Sie kann beispielsweise zur Beeinflussung der Strömung eines an der Metallfolie vorbei geführten Gasstromes dienen, es ist aber beispielsweise auch bekannt, solche Sekundärstrukturen zur begrenzten Ausbildung von fügetechnischen Verbindungen einzusetzen.

Weiter ist auch bekannt, dass derartige Sekundärstrukturen üblicherweise geprägt werden, wobei bevorzugt in unmittelbarer Nachbarschaft der Sekundärstruktur ein Loch gestanzt wird. Dabei werden Ausstülpungen in die Metallfolie generiert, die eine gezielte Führung bzw. Abtrennung von Teilgasströmen hin zu benachbarten Kanälen durch die Metallfolie hindurch ermöglichen.

Eine solche Sekundärstruktur ist aus der WO 91/01807 bekannt, in der ein Wabenkörper beschrieben wird, der aus strukturierten Blechen aufgebaut ist, wobei die Wellenberge bzw. -täler der strukturierten Bleche mit einer Vielzahl von Umstülpungen versehen sind, deren Höhe kleiner oder gleich der Wellenhöhe ausgestaltet ist.

Die vorstehend genannten Metallfolien werden jeweils für unterschiedliche Zwecke eingesetzt und haben bereits zu einer Vielzahl von Abgasbehandlungseinrichtungen geführt, die sich durch einen geringen Druckverlust und eine hohe Effektivität in Hinsicht auf die Behandlung des zu reinigenden Abgasstromes ausgezeichnet haben. Gleichwohl besteht das Bestreben, stets effizienter, langlebigere und flexibel einsetzbare Abgasbehandlungseinrichtungen zu entwickeln.

Hiervon ist es Aufgabe der vorliegenden Erfindung, eine Metallfolie anzugeben, die die vorstehend genannten Zielsetzungen verwirklicht. Insbesondere sind die mit Blick auf den Stand der Technik beschriebenen Probleme zumindest teilweise zu lindern. Dabei soll insbesondere eine Metallfolie vorgeschlagen werden, deren Aufbau einen flexible Einsatz in Abgasbehandlungseinrichtungen ermöglicht, wobei die Metallfolie einfach herstellbar sein soll und auch dauerhaft den thermischen und dynamischen Belastungen im Abgassystem mobiler Verbrennungskraftmaschinen standhalten soll.

Diese Aufgaben werden gelöst mit einer Metallfolie mit den Merkmalen des Patentanspruchs 1. Weitere vorteilhafte Ausgestaltungen der Metallfolie sowie besonders bevorzugte Einsatzmöglichkeiten werden in den abhängigen Patentansprüchen beschrieben. Es ist darauf hinzuweisen, dass die in den Patentansprüchen einzeln aufgeführten Merkmale sich in beliebiger, technologisch sinnvoller Weise miteinander kombinieren lassen und zu weiteren Ausgestaltungen der Erfindung führen.

Die hier vorgeschlagene Metallfolie hat eine Materialdicke im Bereich von 0,15 mm bis 0,02 mm [Millimeter] und weist eine Struktur mit sich über eine Länge der Metallfolie erstreckenden und benachbart zueinander angeordneten Erhebungen und Senken auf. Zumindest ein Teil der Erhebungen oder Senken haben mindestens eine erste Einbuchtung. Die Metallfolie zeichnet sich dadurch aus, dass benachbart zu der mindestens einen ersten Einbuchtung wenigstens eine zweite Einbuchtung vorgesehen ist, die einen von der ersten Einbuchtung verschiedenen Abstand hin zur entsprechenden Erhebung oder Senke hat.

Die hier angegebene Materialdicke spiegelt im Wesentlichen den Bereich wieder, der einen sinnvollen Einsatz der Metallfolie in Abgasbehandlungseinrichtungen ermöglicht. Die Metallfolie besteht in der Regel aus einem hochtemperaturfesten und korrosionsbeständigen Material, insbesondere einem Chrom und Aluminium enthaltenden Stahl. Bevorzugt liegt die Materialdicke in einem Bereich von 0,1 mm bis 0,04 mm.

Mit "Struktur" sind auch alle eingangs genannten Primärstrukturen umfasst, insbesondere ist die Struktur jedoch wellenartig bzw. sinusförmig gestaltet. Dabei werden Erhebungen und Senken gebildet, die sich über die gesamte Länge der Metallfolie vorzugsweise parallel zu einander erstrecken. Die Kuppen der Erhebungen und/oder Senken können demnach rund, eckig oder in sonstiger Weise gestaltet sein.

Die Struktur weist nun eine erste Einbuchtung auf. Diese kann bezüglich einem Teil oder aller Erhebungen, einem Teil oder aller Senken, sowie auf Senken und Erhebungen ausgebildet sein. Dabei ist es auch möglich, dass die Erhebungen bzw. Senken mit mehreren ersten Einbuchtungen, vorzugsweise in Richtung der Länge der Metallfolie bzw. der Erhebungen oder Senken hintereinander liegend, ausgebildet sind. Die Einbuchtungen können durch Drücken, Walzen oder in ähnlicher Weise hergestellt sein. Sie können sich über die Erhebungen (radial) hinaus erstrecken oder in entgegengesetzter Richtung weisen, wobei das gleiche für die Senken gilt.

Erfindungsgemäß wird nun vorgeschlagen, dass benachbart zu der mindestens einen ersten Einbuchtung wenigstens eine zweite Einbuchtung vorgesehen ist. Diese kann sich hinsichtlich der Form, Erstreckung, etc. von der ersten Einbuchtung unterscheiden, dies ist jedoch ist nicht zwingend. Die erste Einbuchtung und die zweite Einbuchtung unterscheiden sich aber jedenfalls im Hinblick auf ihren Abstand hin zur entsprechenden Erhebung oder Senke. Das heißt beispielsweise mit anderen Worten, dass bei einer Ausgestaltung einer ersten Einbuchtung und einer zweiten Einbuchtung in einer Erhebung, der am weitesten von der Erhebung entfernte Teilbereich der ersten Einbuchtung einen anderen Abstand hin zur Erhebung aufweist, als der am weitesten entfernte Teilbereich der zweiten Einbuchtung, wobei der Abstand regelmäßig senkrecht zur Erstreckungsebene der Metallfolie bestimmt wird. Damit wird nun die Erhebung bzw. Senke mit beispielsweise einem stufigen Aufbau gestaltet, wobei die einzelnen Stufen durch die ersten und zweiten Einbuchtungen gebildet sind. Grundsätzlich ist auch möglich, weitere Einbuchtungen mit unterschiedlichen Abständen hin zur entsprechenden Erhebung oder Senke vorzusehen, so dass ein mehrfach gestuftes Profil generiert wird.

Mit einem solchen Aufbau der Metallfolie wird nunmehr die Möglichkeit geschaffen, den Erhebungen bzw. Senken sowie den ersten und zweiten Einbuchtungen unterschiedliche Funktionen zuzuweisen, die eine sehr flexible Beeinflussung des Abgasstroms im späteren Einsatz bzw. einer variablen Fixierung der Metallfolie zu benachbarten Metallfolien und/oder einem Gehäuse der Abgasbehandlungseinrichtung ermöglicht. Hierzu werden nachfolgend noch detailliertere Ausführungen vorgenommen.

Gemäß einer weiteren Ausgestaltung der Metallfolie erstrecken sich die Einbuchtungen ausgehend von der entsprechenden Erhebung oder Senke hin zu einer Richtung. Das heißt mit anderen Worten, dass für den Fall, dass die erste Einbuchtung beispielsweise über eine Erhebung (radial) hinausragt, die zweite Einbuchtung ebenfalls über die Erhebung hinausragt. Dabei ist bevorzugt, dass der absolute Abstand der zweiten Einbuchtung hin zur Erhebung größer ist, als der absolute Abstand der ersten Einbuchtung. Ganz besonders bevorzugt ist der Aufbau der Metallfolie nach der Art, dass sich die ersten und zweiten Einbuchtungen nicht über die Erhebungen oder Senken hinaus erstrecken, sondern in entgegengesetzte Richtung ausgebildet sind. Das bedeutet mit anderen Worten, dass alle Erhebungen bzw. alle Senken eine Art (ebene bzw. glatte) Grenzfläche jeweils definieren, welche von den Einbuchtungen nicht durchbrochen wird.

Weiter wird auch vorgeschlagen, dass wenigstens die erste Einbuchtung oder die zweite Einbuchtung die Form eines Plateaus hat. Bevorzugt sind die ersten und die zweiten Einbuchtung als Plateau ausgestaltet. Mit "Plateau" ist ein im Wesentlichen ebener bzw. flächiger Verlauf der Einbuchtung gemeint, also insbesondere sind die Einbuchtung nicht ebenfalls mit einer Wellenform versehen sondern weisen mindestens einen Teilbereich auf, in dem sie flächig bzw. nahezu eben verlaufen. Bevorzugt stellt dieses Plateau auch den Teilabschnitt der Einbuchtung dar, der den größten Abstand hin zu der jeweiligen Erhebung oder Senke hat. Mit einer solchen Ausgestaltung der Einbuchtung als Plateau werden definierte Anlageflächen geschaffen, die für den späteren Einsatz, wie er weiter unten erläutert wird, vorteilhaft ist.

Außerdem wird auch vorgeschlagen, dass wenigstens die erste Einbuchtung oder die zweite Einbuchtung gasdurchlässig ausgeführt ist. Damit ist insbesondere gemeint, dass die Metallfolie im Bereich der Einbuchtung für ein Gas durchströmbar ist. Um dies zu ermöglichen, können beispielsweise Öffnungen in die Metallfolie eingebracht sein, die ein Durchströmen für Gase ermöglichen. Damit werden beim Einsatz einer solchen Metallfolie in einer Abgasbehandlungseinrichtung beispielsweise kommunizierende Kanäle gebildet, wobei Teilgasströme von einem Kanal durch die Öffnungen der Einbuchtungen in einen benachbarten Kanal strömen können. Diese Variante bietet sich beispielsweise an, wenn die Metallfolie als Filter-Trägermaterial in einer Abgasbehandlungseinrichtung zum Einsatz gelangt, für viele andere Anwendungen ist es aber vorteilhaft, die Metallfolie gasundurchlässig auszuführen.

Gemäß einer weiteren Ausgestaltung der Metallfolie bilden die Erhebungen und Senken eine Höhe der Metallfolie, wobei der Abstand hin zur ersten Einbuchtung im Bereich von 50 % bis 20 % der Höhe liegt. Damit wird eine relativ geringe Deformierung der Erhebung bzw. Senke während der Fertigung realisiert, wobei Materialschäden bzw. Formfehler vermieden werden, die unter Umständen bei einer hohen thermischen und dynamischen Belastung, wie sie später im Automobilbereich auftritt, zum Einreißen der Metallfolie führen könnte.

In diesem Zusammenhang wird auch vorgeschlagen, dass die Erhebungen und Senken eine Höhe der Metallfolie binden, wobei der Abstand hin zur zweiten Einbuchtung im Bereich von 100 % bis 40 % der Höhe liegt. Besonders bevorzugt ist die Ausgestaltung, bei der die zweite Einbuchtung mit einem Abstand ausgeführt ist, der in etwa im Bereich des doppelten Abstandes der ersten Einbuchtung liegt.

Entsprechend einer weiteren Ausgestaltung der Metallfolie schließt sich eine erste Einbuchtung an eine Stirnseite der Metallfolie an. Das heißt mit anderen Worten, dass an mindestens einer Stirnseite die Erhebung bzw. Senke direkt mit einer ersten Einbuchtung ausgeführt ist. Damit können beispielsweise die Kontaktbereiche zu benachbarten Metallfolien oder Gehäusen später im Einsatz exakt definiert werden, wobei gerade nahe der Stirnseite der Metallfolien ein solcher Kontakt unterbunden wird.

Weiter wird ein Verbund aus Filtermaterial und Stützstruktur vorgeschlagen, wobei die Stützstruktur eine erfindungsgemäße Metallfolie gemäß den vorstehenden Ausführungen umfasst und zumindest die erste Einbuchtung oder die zweite Einbuchtung eine Aufnahme für das Filtermaterial bildet. Wird das Filtermaterial beispielsweise mit einer konstanten Materialstärke ausgeführt, so dienen jeweils die ersten oder die zweiten Einbuchtungen als Aufnahme. Für Filtermaterial mit einer variierenden Materialstärke können alle Einbuchtungen als Aufnahme bzw. Anlagefläche für das Filtermaterial dienen. Eine solche Ausgestaltung des Verbundes führt dazu, dass beispielsweise ein Verschieben des Filtermaterials in Richtung der Erhebungen und Senken vermieden wird. Gleichzeitig werden die Kanten des Filtermaterials zumindest teilweise vor einem direkten Anströmen geschützt. Gleichwohl ist es möglich, zusätzliche fügetechnische Verbindungen vorzusehen, die eine unverlierbare Fixierung des Filtermaterials an der als Metallfolie ausgeführten Stützstruktur bereitstellen. Bevorzugt erstreckt sich dieses Filtermaterial über die Einbuchtungen von mehreren Erhebungen und/oder Senken. Mit "Aufnahme" ist insbesondere eine solche Ausgestaltung der Einbuchtungen gemeint, dass zumindest teilweise ein Formschluss von Metallfolie und Filtermaterial gebildet ist.

Bei einem solchen Verbund ist es vorteilhaft, dass das Filtermaterial eine Materialstärke hat, die zumindest teilweise dem Abstand der ersten Einbuchtung oder der zweiten Einbuchtung entspricht. Das führt beispielsweise dazu, dass bei der Stapelung mehrerer solcher Verbunde aufeinander ein Kontakt von der benachbarten Stützstruktur mit dem Filtermaterial vermieden wird, da ein Kontakt ausschließlich über die Metallfolien stattfindet.

Als ein vorteilhaftes Einsatzgebiet wird zudem ein Wabenkörper vorgeschlagen, der zumindest teilweise strukturierte Metallfolien aufweist, die so angeordnet sind, dass eine Vielzahl von Kanälen gebildet sind, wobei dieser Wabenkörper wenigstens eine hier erfindungsgemäß beschriebene strukturierte Metallfolie aufweist. Bevorzugt wird ein solcher Wabenkörper mit einer Mehrzahl von strukturierten Metallfolien und glatten Metallfolien aufgebaut, die abwechselnd gestapelt und anschließend miteinander verbunden bzw. aufgewickelt werden. Dabei ergeben sich die gewünschten Querschnitte des Wabenkörpers, beispielsweise rund, oval, mehreckig, etc.. Grundsätzlich ist es dabei möglich, dass die glatten und/oder strukturierten Metallfolien mit Durchlässen versehen sind, so dass Verbindungen hin zu einander benachbart angeordneten Kanälen geschaffen sind. Die Anzahl von Kanälen pro Quadratinch liegt bevorzugt im Bereich von 200 cpsi ("cell per square inch"; 1 Quadratinch entspricht etwa 6,4516 Quadratzentimeter) bis 1.600 cpsi. Die Kanäle können dabei entweder vollständig durchströmbar sein, es ist aber auch möglich, dass die Kanäle beispielsweise wechselseitig verschlossen ausgeführt sind. Der Verschluss kann dabei durch zusätzliche Mittel bewirkt werden, es ist jedoch auch möglich, eine der Einbuchtungen hierfür einzusetzen. Zusätzlich zu den glatten und strukturierten Metallfolien können weitere Komponenten in dem Wabenkörper integriert sein, beispielsweise auch Filtermaterial.

Der Wabenkörper ist vorteilhafterweise so gestaltet, dass wenigstens einem Teil der Kanäle zumindest gegenüber der ersten Einbuchtung oder der zweiten Einbuchtung gasdurchlässig ausgeführt ist. Bevorzugt sind alle Kanäle gegenüber beiden Einbuchtungen gasdurchlässig ausgebildet. Die Gasdurchlässigkeit wird bevorzugt dadurch erreicht, dass ein poröses Material vorliegt, welches insbesondere eine Filterwirkung für Partikel, Ruß oder ähnliches aufweist. Die Porosität kann entsprechend der gewünschten Reinigungswirkung angepasst sein, beispielsweise durch Einsatz geeigneter Faservliese, Schaumwerkstoffe, keramischer Materialen, etc., wobei diese den Umgebungsbedingungen im Abgassystem mobiler Verbrennungskraftmaschinen dauerhaft standhalten können.

Schließlich wird auch eine Abgasbehandlungseinrichtung für mobile Verbrennungskraftmaschinen vorgeschlagen, welche wenigstens eine erfindungsgemäße Metallfolie, wenigstens einen vorstehend erfindungsgemäß beschriebenen Verbund aus Filtermaterial und Stützstruktur oder wenigstens einen Wabenkörper, wie zuvor erfindungsgemäß beschrieben, umfasst. Die Abgasbehandlungseinrichtung kann als katalytischer Konverter, Strömungsmischer, Partikelfalle, Filter, Adsorber, etc. ausgeführt sein. Besonders bevorzugt ist bei diesen Abgasbehandlungseinrichtung, dass die eingesetzten Metallfolien zumindest teilweise (katalytisch) beschichtet sind.

Besonders bevorzugte Ausführungsbeispiele der Erfindung sowie das technische Umfeld werden an Hand der Figuren näher erläutert. Dabei ist darauf hinzuweisen, dass die Erfindung nicht auf die dargestellten Ausführungsvarianten beschränkt ist.

Es zeigen:
- Figur 1:: eine erste Ausführungsvariante der Metallfolie als Draufsicht und Seitenansicht;
- Figur 2:: ein Detail eines Wabenkörpers im Schnitt;
- Figur 3:: eine Ausführungsvariante eines Verbundes;
- Figur 4:: schematisch den Aufbau eines Abgassystems einer mobilen Verbrennungskraftmaschine mit einer Abgasbehandlungseinrichtung; und
- Figur 5:: schematisch und perspektivisch einen Teil einer Ausgestaltung des Wabenkörpers.

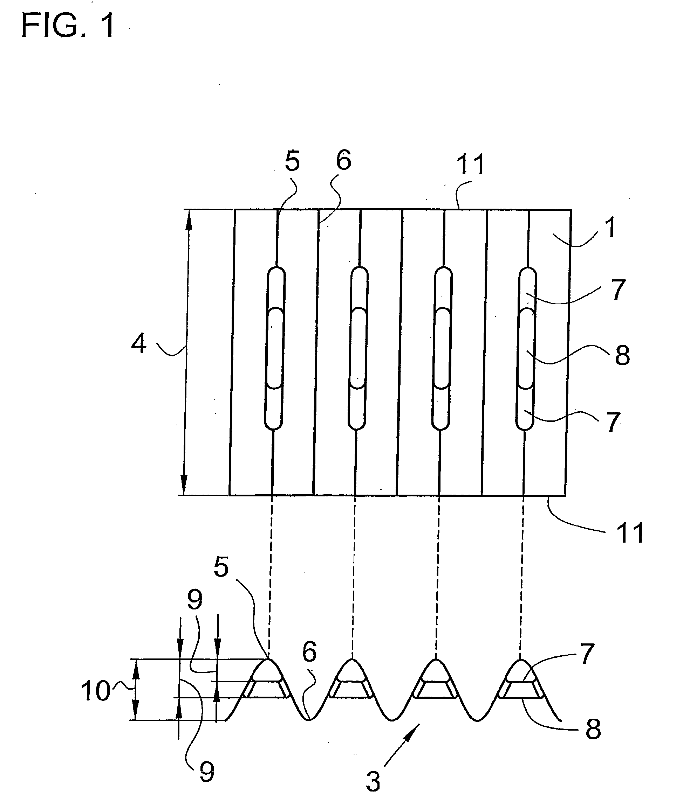

Figur 1 zeigt schematisch eine Metallfolie 1 mit einer Struktur 3, die über eine Länge 4 der Metallfolie 1 mit benachbart zueinander angeordneten Erhebungen 5 und Senken 6 ausgeführt ist. Dabei ist oben in Figur 1 eine Draufsicht und im unteren Bereich der Figur 1 eine Frontalansicht dargestellt.

In der hier dargestellten Ausführungsvariante weisen alle benachbart zueinander angeordneten Erhebungen 5 zwei erste Einbuchtungen 7 auf, zwischen denen eine zweite Einbuchtung 8 vorgesehen ist. Während sich die Erhebungen 5 und Senken 6 von einer Stirnseite 11 der Metallfolie 1 über die gesamte Länge 4 bis zur gegenüberliegenden Stirnseite 11 erstrecken, sind die Einbuchtungen 7, 8 nur über einen Teil der Erhebungen 5 ausgebildet.

Wie aus der Frontalansicht (unten in Figur 1) zu erkennen ist, erstrecken sich die ersten Einbuchtungen 7 und zweiten Einbuchtungen 8 von den Erhebungen 5 in Richtung der Senken 6, also in entgegengesetzter Richtung zu den Erhebungen 5. Mit den Erhebungen 5 und den Senken 6 wird eine Höhe 10 der Metallfolie 11 begrenzt, wobei die Abstände 9 der Einbuchtungen 7, 8 kleiner als die Höhe 10 sind. Aus der Frontalansicht ist auch zu erkennen, dass ein erster Abstand 9 der ersten Einbuchtung 7 kleiner ausgeführt ist als ein zweiter Abstand 9 der zweiten Einbuchtung 8.

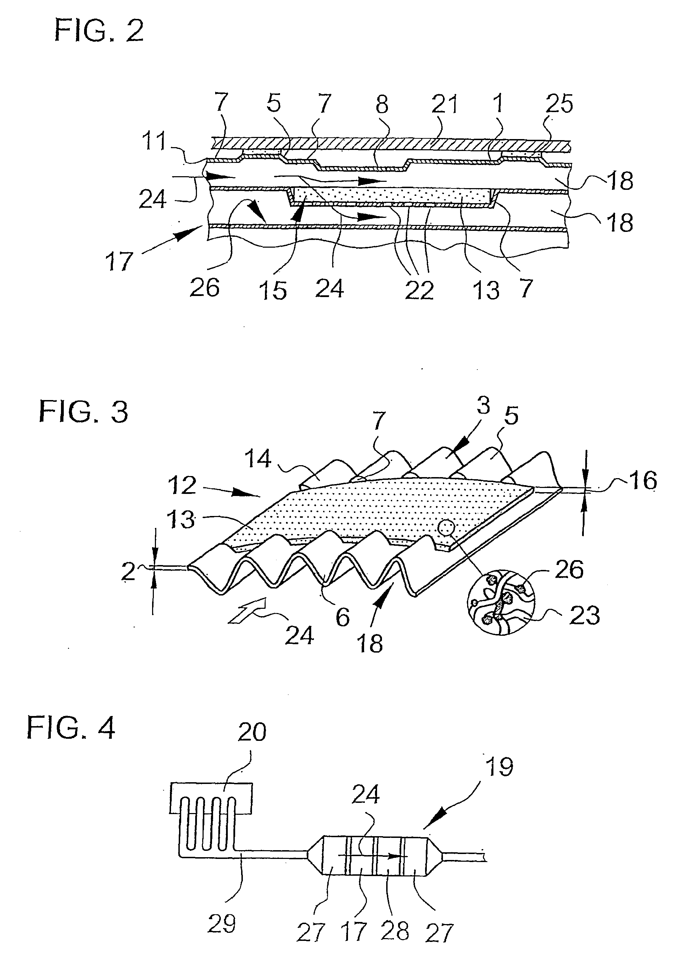

Zur Veranschaulichung eines vorteilhaften Einsatzgebietes einer solchen Metallfolie 1 ist in Figur 2 ein Detail eines Wabenkörpers 17 dargestellt. Bei dieser Ausführungsvariante ist die Metallfolie 1 wie eine Art Manschette als äußere Begrenzung des Wabenkörpers 17 hin zu einem Gehäuse 21 ausgestaltet. Dabei sind die Erhebungen 5 als Kontakt hin zu dem Gehäuse 21 ausgeführt, so dass zwischen den Erhebungen 5 und dem Gehäuse 21 ein Verbindungsabschnitt 25 gebildet ist. Der Verbindungsabschnitt 25 umfasst bevorzugt eine fügetechnische Verbindung, beispielsweise mittels eines Lotmaterials. Um ein möglichst unbehindertes expandieren bzw. Kontrahieren des Wabenkörpers 17 in Folge von thermischen Wechselbeanspruchungen zu erlauben, sind zwischen den Verbindungsabschnitten 25 keine weiteren Kontaktpunkte vorgesehen. Dies wird dadurch erreicht, dass die Metallfolie 1 erste Einbuchtungen 7 aufweist, die sich zum Teil bis zur Stirnseite 11 der Metallfolie 1 fortsetzen. Gleichzeitig wird auf diese Weise sichergestellt, dass beispielsweise aus dem Verbindungsabschnitt 25 während der Herstellung weglaufendes Lotmaterial nicht zusätzliche Verbindungspunkte generiert.

Außerdem stellt die Metallfolie 1 eine Begrenzung für einen Kanal 18 dar, der für ein Abgas in Strömungsrichtung 24 zumindest teilweise durchströmbar ist. Durch die Ausgestaltung der Metallfolie 1 mit einer zweiten Einbuchtung 8 wird das Strömungsverhalten des Abgases beeinflusst, wie dies durch die Pfeile dargestellt ist. Ein Teil der Abgasströmung wird beispielsweise gezwungen durch eine benachbarte Metallfolie hindurchzuströmen, wobei es gleichzeitig ein Filtermaterial 13 durchdringt.

Das Filtermaterial 13 ist mittels einer Metallfolie fixiert, die nur eine erste Einbuchtung aufweist. Die erste Einbuchtung hat nun einen Abstand 9 von der Erhebung 5, bzw. von der Oberfläche, wenn es sich hierbei um glatte Metallfolie handelt, der im Wesentlichen der Materialstärke16 des Filtermaterials 13 entspricht. Die Metallfolie ist zudem im Bereich der als Aufnahme 15 ausgestalteten ersten Einbuchtung 7 mit einer Mehrzahl von Öffnungen 22 versehen, die ein Durchströmen des Filtermaterials 13 und der Metallfolie 1 hin zu benachbarten Kanälen 18 ermöglicht. Somit dient das Filtermaterial 13 beispielsweise zur Absonderung von Festpartikeln, die im Abgas enthalten sind, wobei die Metallfolien 1 mit einer Beschichtung 26 versehen sind, die im Abgas enthaltene, insbesondere gasförmige, Schadstoffe umwandelt.

Figur 3 zeigt schematisch und perspektivisch einen Verbund 12 umfassend eine als Metallfolie 1 ausgeführte Stützstruktur 14 und ein Filtermaterial 13. Die Stützstruktur 14 ist hier mit einer ersten Einbuchtung 7 und einer (nicht dargestellten) zweiten Einbuchtung 8 versehen. Grundsätzlich ist es auch unabhängig von der hier beschriebenen erfindungsgemäßen Metallfolie 1 möglich, solche Stützstrukturen 14 aus einer Metallfolie 1 herzustellen, die nur eine erste Einbuchtung 7 aufweist. Die Struktur 3 der Metallfolie 1 bzw. Stützstruktur 14 weist wiederum einen regelmäßigen Aufbau mit Erhebungen 5 und Senken 6 auf. Die Struktur 3 begrenzt zumindest teilweise für ein Abgas in Strömungsrichtung 24 durchströmbare Kanäle 18. Die Stützstruktur 14 bzw. die Metallfolie 1 weist eine Materialdicke 2 im Bereich von 0,15 mm bis 0,02 mm auf Die Materialstärke 16 des Filtermaterials 13 liegt in etwas im Bereich des ersten Abstandes 9 der ersten Einbuchtung 7 von den Erhebungen 5. Das Filtermaterial 13 ist hier als Vlies mit einem Fasern 23 umfassenden Material aufgebaut, wobei die Fasern 23 ebenfalls beschichtet sind (Beschichtung 26). Als Fasern 23 werden bevorzugt metallische Fasern 23 eingesetzt, wobei diese gleichwohl hochtemperaturfest und korrosionsbeständig sind.

Figur 4 zeigt schematisch den Aufbau einer Abgasbehandlungseinrichtung 19 einer mobilen Verbrennungskraftmaschine 20. Das in der Verbrennungskraftmaschine 20 generierte Abgas strömt durch die Abgasleitung 29 hin zu mehreren Komponenten zur Abgasbehandlung. In Strömungsrichtung 24 sind hier beispielsweise ein Katalysator 27, ein Wabenkörper 17, ein Adsorber 28 und wieder ein Katalysator 27 vorgesehen. Nach Durchströmen des Abgases durch diese Komponenten sind die im Abgas zunächst enthaltenen Schadstoffe zu einem großen Teil abgebaut.

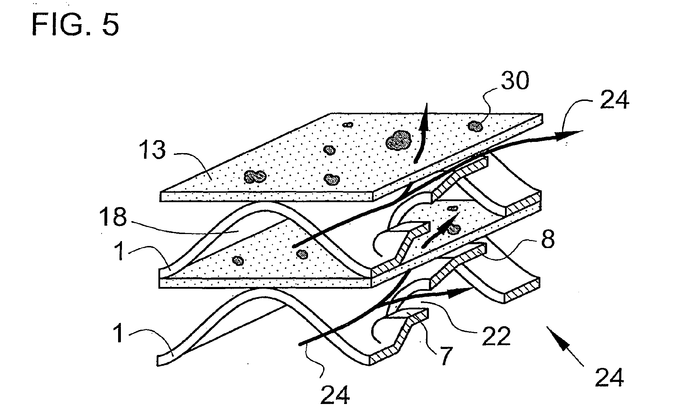

Figur 5 zeigt schematisch und perspektivisch einen Teil einer Ausgestaltung des Wabenkörpers 17. Der Wabenkörper 17 ist mit abwechselnd angeordneten Lagen aus Metallfolie 1 und Filtermaterial 13 aufgebaut. Während die Metallfolien 1 mit einer Struktur 3 ausgeführt sind, umfasst das Filtermaterial 13 im wesentlichen glatte Lagen. Wie in der Schnittdarstellung zu erkennen ist, sind die ersten Einbuchtungen 7 und zweiten Einbuchtungen 8 hintereinander nach Art von Leitschaufeln ausgestaltet, wobei hier eine Öffnung 22 dazwischen vorgesehen ist. Bei der gezeigten Darstellung weisen alle Einbuchtungen 7,8 eine solche dazwischen angeordnete Öffnung 22 auf, dies ist aber nicht zwingend.

Gegenüber der ersten Einbuchtung 7 und der zweiten Einbuchtung 8 ist der Kanal 18, dessen Wandung dort mit dem Filtermaterial 13 gebildet ist, gasdurchlässig ausgeführt. Diese Kombination führt zu einer besonders effektiven Reinigung des Abgasstromes, da die Strömungsrichtung 22 in vielfältiger Weise beeinflusst wird, so dass sich immer wieder neue Teilgasströme bilden, die durch das Filtermaterial 13 in benachbarte Kanäle 18 hindurchtreten, parallel zum Filtermaterial 13 zeitweise eindringen und/oder einfach nur im Kanal 18 an den Einbuchtungen 7,8 vorbeiströmen. Dabei werden wiederholt Strömungsverwirbelungen erzeugt, die zu einem intensiven Kontakt der im Abgas enthaltenen Partikel 30 mit dem Filtermaterial führt und schließlich dort eine Anlagerung der Partikel 30 zur Folge hat. Die ein- bzw. angelagerten Partikel 30 können nun chemisch zu gasförmigen Bestandteilen umgewandelt werden.

### Bezugszeichenliste

- 1: Metallfolie
- 2: Materialdicke
- 3: Struktur
- 4: Länge
- 5: Erhebung
- 6: Senke
- 7: Erste Einbuchtung
- 8: Zweite Einbuchtung
- 9: Abstand
- 10: Höhe
- 11: Stirnseite
- 12: Verbund
- 13: Filtermaterial
- 14: Stützstruktur
- 15: Aufnahme
- 16: Materialstärke
- 17: Wabenkörper
- 18: Kanal
- 19: Abgasbehandlungseinrichtung
- 20: Verbrennungskraftmaschine
- 21: Gehäuse
- 22: Öffnung
- 23: Faser
- 24: Strömungsrichtung
- 25: Verbindungsabschnitt
- 26: Beschichtung
- 27: Katalysator
- 28: Adsorber
- 29: Abgasleitung
- 30: Partikel

## Patentansprüche

1. Metallfolie (1) mit einer Materialdicke (2) im Bereich von 0,15 mm bis 0,02 mm aufweisend eine Struktur (3) mit sich über eine Länge (4) der Metallfolie (1) erstrechenden und benachbart zueinander angeordneten Erhebungen (5) und Senken (6), wobei zumindest ein Teil der Erhebungen (5) oder Senken (6) mindestens eine erste Einbuchtung (7) aufweist, **dadurch gekennzeichnet, dass** benachbart zu der mindestens einen ersten Einbuchtung (7) wenigstens eine zweite Einbuchtung (8) vorgesehen ist, die einen von der ersten Einbuchtung (7) verschiedenen Abstand (9) hin zur entsprechenden Erhebung (5) oder Senke (6) hat, wobei die Erhebung (5) oder Senke (6) mit einem stufigem Aufbau gestaltet ist, wobei die einzelne Stufe wenigstens durch die erste Einbuchtung (7) und die zweite Einbuchtung (8) gebildet ist.

2. Metallfolie (1) nach Anspruch 1, **dadurch gekennzeichnet, dass** die Einbuchtungen (7, 8) sich ausgehend von der entsprechenden Erhebung (5) oder Senke (6) hin zu einer Richtung erstrecken.

3. Metallfolie (1) nach Anspruch 1 oder 2, **dadurch gekennzeichnet, dass** wenigstens die erste Einbuchtung (7) oder die zweite Einbuchtung (8) die Form eines Plateau hat.

4. Metallfolie (1) nach einem der Ansprüche 1 bis 3, **dadurch gekennzeichnet, dass** wenigstens die erste Einbuchtung (7) oder die zweite Einbuchtung (8) gasdurchlässig ausgeführt ist.

5. Metallfolie (1) nach einem der Ansprüche 1 bis 4, **dadurch gekennzeichnet, dass** die Erhebungen (5) und Senken (6) eine Höhe (10) der Metallfolie (1) bilden, wobei der Abstand (9) hin zur ersten Einbuchtung (7) im Bereich von 50 % bis 20 % der Höhe (10) liegt.

6. Metallfolie (1) nach einem der Ansprüche 1 bis 5, **dadurch gekennzeichnet, dass** die Erhebungen (5) und Senken (6) eine Höhe (10) der Metallfolie (1) bilden, wobei der Abstand (9) hin zur zweiten Einbuchtung (8) im Bereich von 100 % bis 40 % der Höhe (10) liegt.

7. Metallfolie (1) nach einem der Ansprüche 1 bis 6, **dadurch gekennzeichnet, dass** sich eine erste Einbuchtung (7) an eine Stirnseite (11) der Metallfolie (1) anschließt.

8. Verbund (12) aus Filtermaterial (13) und Stützstruktur (14), **dadurch gekennzeichnet, dass** die Stützstruktur (14) eine Metallfolie (1) nach einem der vorherigen Ansprüche umfasst und zumindest die erste Einbuchtung (7) oder die zweite Einbuchtung (8) eine Aufnahme (15) für das Filtermaterial (13) bildet.

9. Verbund (12) nach Anspruch 8, **dadurch gekennzeichnet, dass** das Filtermaterial (13) eine Materialstärke (16) hat, die zumindest teilweise dem Abstand (9) der ersten Einbuchtung (7) oder der zweiten Einbuchtung (8) entspricht.

10. Wabenkörper (17) aufweisen zumindest teilweise strukturierte Metallfolien, die so angeordnet sind, dass eine Vielzahl von Kanälen (18) gebildet sind, **dadurch gekennzeichnet, dass** dieser wenigstens eine strukturierte Metallfolie (1) nach einem der Ansprüche 1 bis 7 aufweist.

11. Wabenkörper nach Anspruch 10, **dadurch gekennzeichnet, dass** wenigstens einem Teil der Kanäle (18) zumindest gegenüber der ersten Einbuchtung (7) oder der zweiten Einbuchtung (8) gasdurchlässig ausgeführt ist.

12. Abgasbehandlungseinrichtung (19) für mobile Verbrennungskraftmaschinen (20) umfassend wenigstens eine Metallfolie (1) nach einem der Ansprüche 1 bis 7, wenigstens einen Verbund (12) nach Anspruch 8 oder 9 oder wenigstens einen Wabenkörper (17) nach Anspruch 10 oder 11.

## Claims

1. A metal foil (1) with a material thickness (2) in the range from 0.15 mm to 0.02 mm, having a structure (3) with elevations (5) and depressions (6) which extend over a length (4) of the metal foil (1) and are arranged adjacent to one another, wherein at least some of the elevations (5) or depressions (6) have at least one first indentation (7), **characterized in that** at least one second indentation (8) is provided adjacent to the at least one first indentation (7), which at least one second indentation (8) is at a different distance (9) from the corresponding elevation (5) or depression (6) than the first indentation (7), wherein the elevation (5) or depression (6) is formed with a stepped design, with the individual step being formed by the first indentation (7) and the second indentation (8).

2. The metal foil (1) as claimed in claim 1, **characterized in that** the indentations (7, 8) extend in one direction from the corresponding elevation (5) or depression (6).

3. The metal foil (1) as claimed in claim 1 or 2, **characterized in that** at least the first indentation (7) or the second indentation (8) is in the shape of a plateau.

4. The metal foil (1) as claimed in one of claims 1 to 3, **characterized in that** at least the first indentation (7) or the second indentation (8) is designed to be permeable to gas.

5. The metal foil (1) as claimed in one of claims 1 to 4, **characterized in that** the elevations (5) and depressions (6) form a height (10) of the metal foil (1), with the distance (9) to the first indentation (7) being in the range from 50% to 20% of the height (10).

6. The metal foil (1) as claimed in one of claims 1 to 5, **characterized in that** the elevations (5) and depressions (6) form a height (10) of the metal foil (1), with the distance (9) to the second indentation (8) being in the range from 100% to 40% of the height (10).

7. The metal foil (1) as claimed in one of claims 1 to 6, **characterized in that** the first indentation (7) adjoins an end side (11) of the metal foil (1).

8. An assembly (12) made from filter material (13) and a support structure (14), **characterized in that** the support structure (14) comprises a metal foil (1) as claimed in one of the preceding claims, and at least the first indentation (7) or the second indentation (8) forms a receptacle (15) for the filter material (13).

9. The assembly (12) as claimed in claim 8, **characterized in that** the filter material (13) has a material thickness (16) which at least partially corresponds to the distance (9) of the first indentation (7) or the second indentation (8).

10. A honeycomb body (17) having at least partially structured metal foils which are arranged so as to form a plurality of channels (18), **characterized by** having at least one structured metal foil (1) as claimed in one of claims 1 to 7.

11. The honeycomb body as claimed in claim 10, **characterized in that** at least some of the channels (18) are designed to be permeable to gas at least relative to the first indentation (7) or the second indentation (8).

12. An exhaust gas treatment device (19) for mobile internal combustion engines (20), comprising at least one metal foil (1) as claimed in one of claims 1 to 7, at least one assembly (12) as claimed in claim 8 or 9, or at least one honeycomb body (17) as claimed in claim 10 or 11.

## Revendications

1. Feuille métallique (1) avec un épaisseur de matériau (2) dans la gamme de 0,15 mm à 0,02 mm, ayant une structure (3) avec des élévations (5) et des dépressions (6) s'étendant sur une longueur (4) des feuilles métalliques (1) et étant agencées de manière adjacente les unes aux autres, au moins une partie des élévations (5) ou des dépressions (6) ayant au moins une première indentation (7), **caractérisée en ce qu'**au moins une deuxième indentation (8) est prévue qui est adjacente à l'au moins une première indentation (7), laquelle au moins deuxième indentation (8) ayant un écart (9) différent de l'élévation (5) correspondante ou de la dépression (6) correspondante que la première indentation (7), l'élévation (5) ou la dépression (6) étant formée avec une construction dégradée, avec l'étape individuelle étant formée au moins par la première indentation (7) et la deuxième indentation (8).

2. Feuille métallique (1) selon la revendication 1, **caractérisée en ce que** les indentations (7, 8) s'étendent dans une direction à partir de l'élévation (5) ou de la dépression (6) correspondante.

3. Feuille métallique (1) selon la revendication 1 ou 2, **caractérisée en ce qu'**au moins la première indentation (7) ou la deuxième indentation (8) a la forme d'un plateau.

4. Feuille métallique (1) selon l'une quelconque des revendications 1 à 3, **caractérisée en ce qu'**au moins la première indentation (7) ou la deuxième indentation (8) est réalisée de manière à être perméable au gaz.

5. Feuille métallique (1) selon l'une quelconque des revendications 1 à 4, **caractérisée en ce que** les élévations (5) et les dépressions (6) forment une hauteur (10) de la feuille métallique (1), l'écart (9) jusqu'à la première indentation (7) se trouvant dans la gamme de 50 % à 20 % de la hauteur (10).

6. Feuille métallique (1) selon l'une quelconque des revendications 1 à 5, **caractérisée en ce que** les élévations (5) et les dépressions (6) forment une hauteur de la feuille métallique (1), l'écart (9) jusqu'à la deuxième indentation (8) se trouvant dans la gamme de 100 % à 40 % de la hauteur (10).

7. Feuille métallique (1) selon l'une quelconque des revendications 1 à 6, **caractérisée en ce qu'**une première indentation (7) se joint à une face frontale (11) de la feuille métallique (1).

8. Composite (12) de matériau de filtre (13) et structure de support (14), **caractérisé en ce que** la structure de support (14) comprend une feuille métallique (1) selon l'une quelconque des revendications précédentes et qu'au moins la première indentation (7) ou la deuxième indentation (8) forme un logement (15) pour le matériau de filtre (13).

9. Composite (12) selon la revendication 8, **caractérisé en ce que** le matériau de filtre (13) a une épaisseur de matériau (16) qui correspond au moins partiellement à l'écart (9) de la première indentation (7) ou de la deuxième indentation (8).

10. Corps en nids d'abeilles (17) ayant des feuilles métalliques au moins partiellement structurées, qui sont agencées de manière telle qu'une multiplicité de canaux (18) sont formés, **caractérisé en ce que** celui-ci a au moins une feuille métallique structurée (1) selon l'une quelconque des revendications 1 à 7.

11. Corps en nids d'abeilles selon la revendication 10, **caractérisé en ce qu'**au moins une partie des canaux (18) est réalisée de manière à être perméable au gaz au moins par rapport à la première indentation (7) ou à la deuxième indentation (8).

12. Dispositif de traitement de gaz d'échappement (19) pour des machines à combustion interne mobiles (20) comprenant au moins une feuille métallique (1) selon l'une quelconque des revendications 1 à 7, au moins un composite (12) selon la revendication 8 ou 9 ou au moins un corps en nids d'abeilles (17) selon la revendication 10 ou 11.
